# EUROPEAN PATENT APPLICATION

(11) **EP 1 193 698 A2**
(43) Date of publication of application: **03.04.2002**
(21) Application number: 01308400.9
(22) Date of filing: 02.10.2001
(51) Int. Cl.: G11B 7/22, H01S 5/02, H01S 5/022

(54) **Laser diode fixing method**

(30) Priority: 02.10.2000 JP 2000302694
(71) Applicant: Mitsumi Electric Company Ltd., Chofu-shi Tokyo (JP)
(72) Inventor: Hori, Ken'ichi, c/o Mitsumi Electric Co., Ltd., Atsugi-shi, Toyko (JP); Takeuchi, Toshio, c/o Mitsumi Electric Co., Ltd., Atsugi-shi, Toyko (JP); Imi, Kazutomo, c/o Mitsumi Electric Co., Ltd., Atsugi-shi, Toyko (JP)
(74) Representative: Kazi, Ilya

(57) **Abstract**

The position of a laser diode 1 is adjusted relative to optical components on an optical base 2 by freely moving the laser diode 1 in X-, Y-and Z-axis directions on a fitting stage. The laser diode 1 is then fixed to the optical base 2 by using solder 3.

## Description

### Background of the Invention:

This invention relates to a laser diode fixing method for fixing a laser diode to an optical base.

A variety of peripheral devices are connected to electronic appliances such as a personal computer, as is well known in the art. One of the peripheral devices is a memory device (recording medium). One of the memory devices (recording media) is CD-R (Compact Disk-Recordable). This CD-R is a writable recording medium and has compatibility with CD-ROM and audio CD (CD-DA). To write information to CD-R, a dedicated device and a dedicated write application are necessary. CD-R can read information besides writing information. The information read operation from CD-R can be conducted by using an ordinary CD-ROM drive. Though the written data cannot be erased, it can be written any number of times.

To write the information (data) to CD-R or to read the information (data) from CD-R, a write/read optical pickup for irradiating a laser beam becomes necessary.

An optical pickup of this kind generally includes a laser beam source for creating an outgoing laser beam, and an optical system for guiding the outgoing laser beam to a recording medium such as an optical disk. The CD-R optical pickup must switch the output of the laser beam from the laser beam source between the information read operation and the information write operation. The information is written when a pit is formed in the recording layer of the optical disk by the irradiation of the laser beam. The output of the laser beam from the laser beam source at the time of writing information is relatively greater than the output at the time of reading information. The output at the time of writing information is between about 10 to 20 times greater than the output of the information read operation.

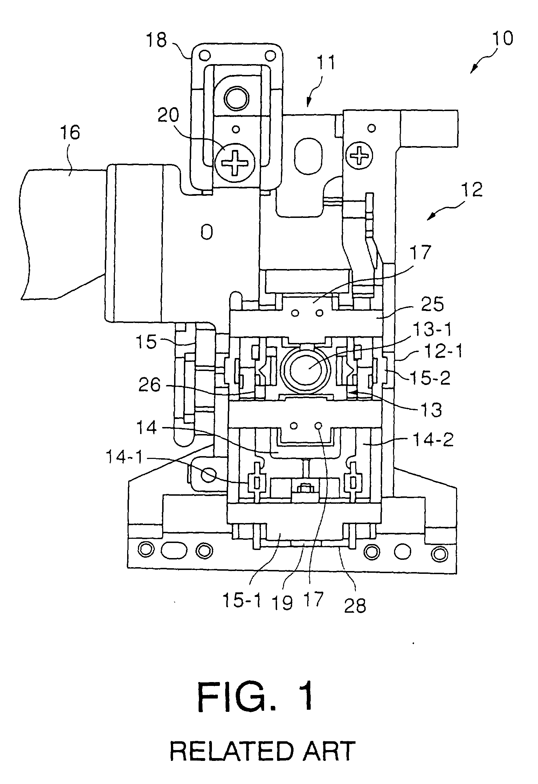

The optical pickup used in the optical disk write/read apparatus such as CD-R will be explained with reference to Fig. 1.

The optical pickup 10 includes an optical base 12, a lens holder 13 equipped with an objective lens 13-1, a tracking coil (not shown) and a focusing coil (not shown), a damper base 14, and an actuator base 25 for accommodating the lens holder 13 and the damper base 14.

The optical pickup 10 further includes a laser unit 11 as a laser beam source for emitting the laser beam. The laser beam emitted from the laser unit 11 is irradiated to the optical disk (CD-R) as an optical memory medium (that will be described later) through a diffraction grating (to be described later), a beam splitter (to be described later), a collimator lens (to be described later) and the objective lens 13-1. The reflected rays of light from the optical disk are incident into a photodiode PD as a light receiving device (to be described later) through the objective lens 13-1, the collimator lens and the beam splitter. In other words, the photodiode receives the reflected beams from the optical disk.

The optical base 12 holds the laser unit 11 and the optical components such as the beam splitter. Incidentally, the optical base 12 is held and fixed by a casing of an optical disk drive (not shown). A circuit substrate 15 is fixed to the side surface of the optical base 12. The circuit substrate 15 is electrically connected to other circuit elements (not shown) of the optical disk drive through a flexible cable 16 connected to the circuit substrate 15.

The lens holder 13 is connected to the damper base 14 through a plurality of suspension wires 26. Their assembly is accommodated in the actuator base 25. A part of the actuator base 25 functions as a yoke 17. The yoke 17 is combined with a magnet.

The actuator base 25 has a substantially frame-like body shaped from a metal, and has an acceptance portion (not shown) for the damper base 14 on one of its end sides. The acceptance portion has a support block 15-1 for fixing the damper base 14. The support block 15-1 is molded integrally with the actuator base 25. Further, substantially hemi-spherical protuberances 15-2 supported by support portions 12-1 disposed on the optical base 12, are formed on both side walls of the frame-like body.

A damper base cover 14-2 made of a transparent resin material is fitted to the damper base 14. A fixing portion 14-1 for fixing one of the ends of a suspension wire 26 is provided to the rear part of the damper base cover 14-2. A damper material (not shown) is charged into the space between the damper base 14 and the damper cover 14-2 to restrict vibration of the suspension wire 26.

A flexible wiring substrate 28 to be soldered and connected to the end portion of the suspension wire 26 are disposed on the rear wall of the damper base 14. The damper base 14 is fixed while being inserted into the space between both side walls of the actuator base 15 and the support block 15-1.

The damper base 14 is fixed by a screw 19 so as to hold the support block 15-1. The damper base 14 rotates with the screw 19 as the center. Skew adjustment is performed by this rotation.

Before the damper base 14 is fixed to the actuator 15, the suspension wire 26 is fitted to the damper base 14. In other words, the lens holder 13 and the damper base 14 are accommodated and fixed inside the actuator base 25 in the form of the assembly connected to each other by a plurality of suspension wires 26.

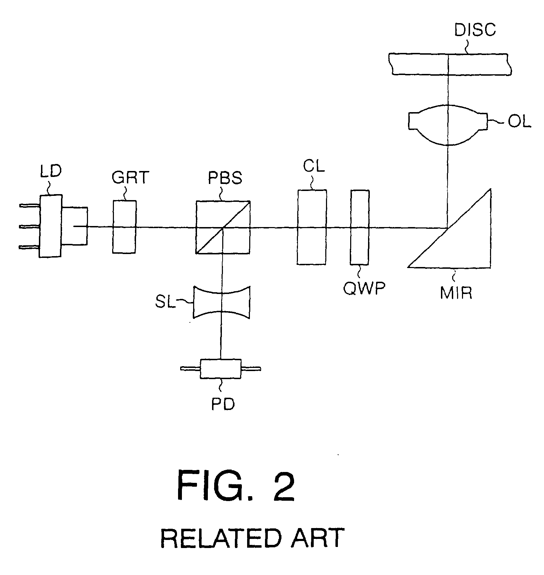

Fig. 2 shows a structural example of the optical system of the optical pickup described above. The optical system shown in Fig. 2 comprises a laser diode LD (corresponding to the laser unit 11 in Fig. 1), a diffraction grating GRT, a polarized beam splitter PBS, a collimator lens CL, a 1/4 wavelength plate QWP, an erecting mirror MIR, an objective lens OL (corresponding to the objective lens 13-1 in Fig. 1), an optical disk DISC, a sensor lens SL and a photodiode (light receiving device) PD.

One laser beam passing to the right from the laser diode LD in the horizontal direction is split into three laser beams by the diffraction grating GRT. Three laser beams so split pass through the polarized beam splitter PBS, the collimator lens CL and the 1/4 wavelength plate QWP. The three laser beams are then bent at right angles by the erecting mirror MIR, travel upward in the vertical direction and are irradiated onto the optical disk DISC through the objective lens OL.

The reflected beams from the optical disk DISC travel downward in the vertical direction and then pass through the objective lens OL. The reflected beams are bent at right angles by the erecting mirror MIR and travel to the left in the horizontal direction. Then the reflected beams pass through the 1/4 wavelength plate QWP and the collimator lens CL and are bent at right angles by the polarized beam splitter PBS. The reflected beams, bent beforehand to travel in the horizontal direction, pass through the sensor lens SL, and are received by the photodiode PD.

Various components are fastened to the optical base 12. In the optical pickup of the optical disk drive, the laser diode must be fitted extremely accurately to the optical base.

The optical base 12 generally has a through-hole, and the laser diode is fitted into the through-hole and is fixed by using an adhesive.

The bonding-fixing method described above that fits the laser diode into the through-hole formed in advance at a predetermined position, however, involves a positioning error resulting from variance of individual shapes of the laser diode and the optical base and resulting from shake of components at the time of fitting. Therefore, it is difficult to mass-produce the products that satisfy desired fitting accuracy.

### Summary of the Invention:

It is an object of the preferred embodiment of the present invention to provide a laser diode fixing method that solves the problem described above and can allow mass-production of products capable of satisfying desired fitting accuracy.

Studies have been made how to solve the problem described above. It has been concluded as a result that in order to satisfy predetermined fitting accuracy even after fixing of a laser diode, it is necessary to conduct position adjustment of the laser diode before its fixing, and then to solder the laser diode after position adjustment. The problem can thus be solved.

In other words, the present invention is characterized in that a position and a rotating direction of a laser diode on X-, Y-, and z-axes on a fitting stage are freely moved to perform position adjustment of the laser diode in relation to optical components on an optical base. The laser diode is then fixed to the optical base by using solder.

### Brief Description of the Drawings:

Preferred features of the present invention will now be described, by way of example only, with reference to the accompanying drawings, in which:-
Fig. 1 is a plan view showing a conventional optical pickup to which a component fixing method according to the present invention is applied;
Fig. 2 is a structural view showing an optical system of the optical pickup shown in Fig. 1;
Fig. 3 is a schematic view showing a laser diode fixing method according to an embodiment of the present invention;
Fig. 4 is a schematic view showing a construction of a tetra-split photodiode; and
Fig. 5 is a schematic view useful for explaining a fixing method in θX and θY directions.

### Description of the Preferred Embodiment:

Hereinafter, a preferred embodiment of the present invention will be explained in detail with reference to the accompanying drawings.

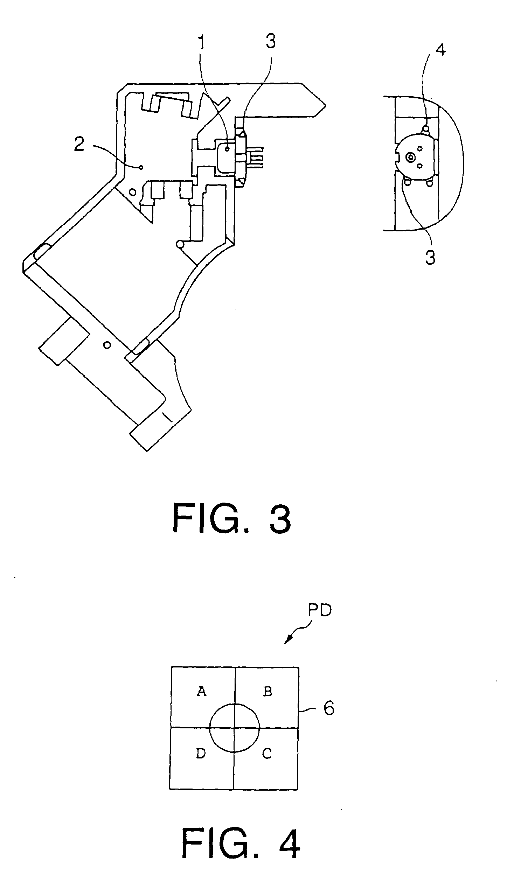

To begin with, position adjustment is conducted so that a laser diode (LD) 1 assumes the best position relative to other optical components on an optical base 2. After this position adjustment is finished, the laser diode 1 is fixed to the optical base 2 by using a solder 3 as shown in Fig. 3. Three pins 4 are formed on the laser diode 1. The laser diode 1 is fixed to the optical base 2 when soldering is applied to these pins 4.

The feature of the present invention resides in the following point. A position adjustment device (not shown) chucks first the laser diode 1. Next, positions and rotating directions of X- and Y-axes on a plane of the optical base and a position of a Z-axis are moved freely. The laser diode 1 is adjusted to the best position relative to other optical components on the optical base 2. The laser diode 1 is then fixed to the optical base 2 by using the solder 3 as described above. Hereinafter, the best position of the laser diode 1 relative to other optical components on the optical base 2 will be explained in further detail with reference to Fig. 4.

The best position is as follows. First, it is the position at which the optical axis of a collimator lens CL is coincident with an optical axis or an emit point of the laser diode LD. Second, it is the position at which rim strength becomes uniform on the right and left sides with respect to an optical axis of an objective lens OL. The term "rim strength" used hereby means standardized optical strength at a periphery when the beams from the laser diode LD are incident to an effective system of the lens.

Third, the best position is the one at which the beams going from the collimator lens CL to the objective lens OL become parallel beams.

There is also a position adjustment method that adjusts the position so that the strength of light from the laser diode LD becomes uniform to the center of the objective lens OL. This method will be explained below.

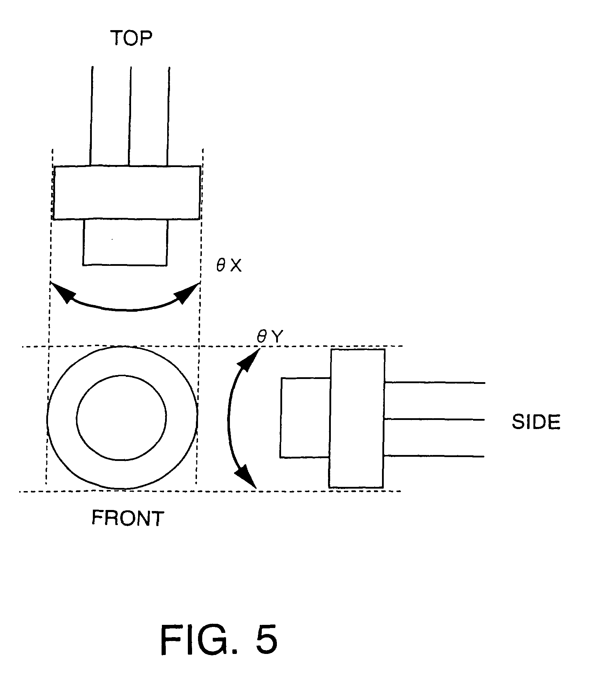

First, the laser diode LD is fixed to θX, θY fitting stage group equipped with a clamping mechanism of the laser diode. Incidentally, this θX, θY fitting stage group is arranged on a position adjustment apparatus. Here, adjustment in the θX, θY directions is conducted simultaneously with adjustment of an X axis, a Y axis, and a Z axis. The θX direction represents a transverse angular direction of the laser diode and the θY direction represents a vertical angular direction of the laser diode, as shown in Fig. 5.

Next, the tetra-split photodiode PD is disposed at the principal point of the objective lens OL. Next, the arrangement of the tetra-split photodiode relative to the objective lens OL will be explained. The tetra-split photodiode PD 6 is disposed so that the principal point of the objective lens OL and the center of the tetra-split photodiode PD 6 coincide with each other and the light-receiving surface and the optical axis are vertical to each other.

The laser diode LD is then allowed to emit light. Further, the Z-axis direction of the laser diode LD is adjusted so that the beams from the collimator lens CL become parallel beams. Next, the X- and Y-axis direction of the laser diode LD are adjusted so that turn-down of the optical axis of the erecting beam from the erecting mirror MIR to the objective lens OL does not exist. Next, as shown in Fig. 4, the θX and θY directions are adjusted so that the rim balance of the split regions A, B, C and D of the tetra-split photodiode PD satisfies the equation A+B = C+D and A+D = B+C. The laser diode LD is then fixed by soldering to the optical base. Finally, the clamp is released and the laser diode LD is removed from the fitting stage group. The adjustment is thus completed.

As explained above, angular adjustment as well as position adjustment according to the prior art have been conducted in such a fashion that the laser diode LD is fixed at a predetermined position (one direction) of the optical base by using an adhesive. In the present invention, the best position of the laser diode LD on the fitting stage is determined. Then the laser diode LD is fixed at that position by soldering. Therefore, the present invention requires few new components and allows easy adjustment of the position of the laser diode LD to an arbitrary position in the X, Y and Z directions.

The present invention can also be used to economically fabricate a high-precision pickup (PU).

The present invention is not limited to the embodiment given above but can of course be changed or modified in various ways without departing from the scope of the invention.

The text of the abstract filed herewith is repeated here as part of the specification.

The position of a laser diode is adjusted relative to optical components on an optical base by freely moving the laser diode in X-, Y- and Z-axis directions on a fitting stage. The laser diode is then fixed to the optical base by using solder.

## Claims

1. A laser-diode fixing method for fixing a laser diode to an optical base, **characterized by** the step of fixing said laser diode to said optical base by soldering after an optical alignment of beam output from the laser diode.

2. A laser-diode fixing method as in claim 1, **characterized by** the step of fixing said laser diode to said optical base by soldering after an optical axis of a collimator lens has been made coincident with an optical axis of said laser diode.

3. A laser-diode fixing method as in claim 1, **characterized by** the step of fixing said laser diode to said optical base by soldering after an optical axis of a collimator lens has been made coincident with an emit point of said laser diode.

4. A laser-diode fixing method as in claim 1, **characterized by** the step of fixing said laser diode to said optical base by soldering after rim strength on both sides has been made uniform with respect to an optical axis of said laser diode.

5. A laser-diode fixing method as in claim 1, **characterized by** the step of fixing said laser diode to said optical base by soldering after beams of the laser diode travelling from a collimator lens to an objective lens are made parallel.

6. A laser-diode fixing method as in claim 1, **characterized by** comprising the steps of:
fixing beforehand said laser diode to a laser-diode transversal angular direction (θX) fitting stage group and a laser-diode vertical angular direction (θY) fitting stage group equipped with a mechanism for clamping said laser diode;
arranging a tetra-split photodiode so that a principal point of an objective lens and a center of said tetra-split photodiode coincide with each other, and a light-receiving surface and an optical axis become perpendicular to each other;
emitting beams from said laser diode;
adjusting a Z-axis direction such that resultant beams from a collimator lens are made parallel;
adjusting X and Y directions such that turn-down of an optical axis of an erecting beam from an erecting mirror to said objective lens does not exist;
adjusting θX and θY directions such that the sum of light power of split regions of said tetra-split photodiode are made equal; and,
fixing said laser diode to said optical base by soldering.

7. A laser-diode fixing method as in any one of claims 1 to 6, wherein:
a plurality of pins capable of being soldered are provided to the position of said optical base at which said laser diode is fixable, and said laser diode is soldered to said plurality of pins.

8. A laser-diode fixing method for fixing a laser diode to an optical base, **characterized in that** said laser diode is fixed to said optical base by soldering so that an optical axis of a collimator lens is coincident with that of said laser diode, or so that an optical axis of the collimator lens is coincident with an emit point of said laser diode, or so that rim strength becomes laterally uniform with respect to an optical axis of an objective lens, or so that beams travelling from a collimator lens to an objective lens become parallel beams.

9. A laser-diode fixing method for fixing a laser diode to an optical base, comprising the steps of:
fixing beforehand said laser diode to a laser-diode transversal angular direction (θX) fitting stage group and a laser-diode vertical angular direction (θY) fitting stage group equipped with a mechanism for clamping said laser diode;
arranging a tetra-split photodiode so that a principal point of an objective lens and a center of said tetra-split photodiode coincide with each other, and a light-receiving surface and an optical axis become perpendicular to each other;
allowing said laser diode to emit beams;
adjusting a Z-axis direction so that the beams from a collimator lens become parallel beams;
adjusting X and Y directions so that turn-down of an optical axis of an erecting beam from an erecting mirror to said objective lens does not exist;
adjusting θX and θY directions so that the sum of light power of the split regions of said tetra-split photodiode become equal; and,
fixing said laser diode to said optical base by soldering.

10. A laser-diode fixing method as in claim 8 or 9, wherein:
a plurality of pins capable of being soldered are provided to the position of said optical base at which said laser diode is fixed, and said laser diode is soldered to said plurality of pins.
